# EUROPEAN PATENT APPLICATION

(11) **EP 0 827 053 A1**
(43) Date of publication of application: **04.03.1998**
(21) Application number: 97907365.7
(22) Date of filing: 18.03.1997
(51) Int. Cl.: G05B 19/05

(54) **PROGRAMMING SYSTEM FOR MOTION CONTROLLER**

(30) Priority: 18.03.1996 JP 87134/96
(71) Applicant: FANUC LTD, Minamitsuru-gun, Yamanashi 401-05 (JP)
(72) Inventor: FUJIBAYASHI, Kentaro, Musashino-shi, Tokyo 180 (JP); SUDOU, Masako, Fanuc Dai-3 Vira-karamatsu, Minamitsuru-gun, Yamanashi 401-05 (JP)
(74) Representative: Billington, Lawrence Emlyn
(86) International application number: JP9700875
(87) International publication number: WO9735240

(57) **Abstract**

A motion program for a motion controller is easily generated in an interactive mode on a display screen by making a ladder program constituted from an ordinary PC (programmable controller) function instruction to be executed after adding the data necessary for designating an axis moving command to the ladder program. The data necessary for designating the axis moving command include the name of the function representing the content of the axis operations (for example, speed, acceleration, etc.), the designation of an axis, and the data of the function (for example, speed value, acceleration value, etc.).

## Description

### Technical Field

The present invention relates to a motion program creating system for a motion controller that performs various control operations for various industrial machines (hereinafter referred to as machines).

### Background Art

Motion controllers are controllers for controlling servomotors, including those designed to control servomotors by coupling a servo module to an NC or PLC (programmable logic controller).

A motion controller performs various controls including sequence control of a machine, and actuates a programmable controller (hereinafter referred to as PC) for control according to steps of procedure defined in a sequence program. In general, a sequence program is created based on a ladder diagram by using PC function instructions. The created ladder diagram is converted into machine instruction and loaded into a specific memory. The sequence program stored in the memory is read out and executed for each unit instruction by a CPU of the PC.

Conventionally, movement control of a machine by means of a motion controller is carried out by controlling individual axes. For this reason, movement control program is generated with use of an axis control command that is formed by using a single PC function instruction or by combining various PC function instructions.

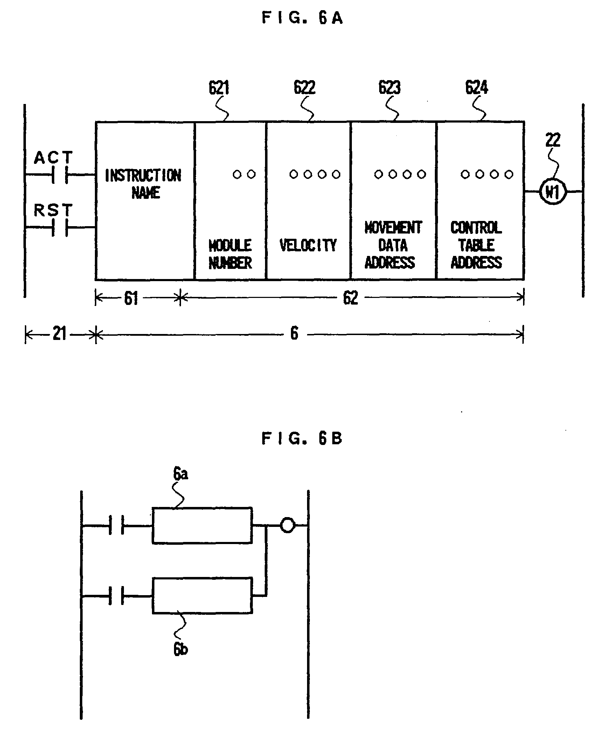

Referring now to FIGS. 6A and 6B, an example of programming for PC axis control by means of a conventional motion controller will be described.

FIG. 6A shows an example of a PC function instruction 6 in a ladder form. This PC function instruction 6 contains one, two or more control conditions (input conditions) for settling conditions in which its execution is started. For example, a control condition ACT is a condition for the activation (ACT) of the function instruction, and a control condition RST for resetting (RESET) of the function instruction. When a control condition 21 is satisfied, the function instruction 6 is executed according to specified steps of procedure. The function instruction 6 includes a single instruction 61 to be specified by instruction name and parameters 62 for specifying the data for executing the instruction 61. The parameters 62, which are set corresponding to the instruction 61, includes a module number 621 for specifying axes of an object of control and the like, moving velocity 622, address 623 of a memory stored with movement data, address 624 of a memory stored with various operation execution condition data, etc., for example.

FIG. 6B shows a combination of two such function instructions 6, each being formed of a single instruction 61. In FIG. 6B reference numerals, 6a and 6b are function instructions, respectively, each including a single instruction.

Movement control of a machine by means of the motion controller is carried out either according to a single PC function instruction 6 such as the one shown in FIG. 6A, or according to the combination of a plurality of function instructions such as the ones shown in FIG. 6B.

For the creation of a movement control program for the motion controller, as described above, although the individual parameters 62, such as the velocity, movement, operation execution conditions, etc., are set corresponding to the single instruction 61 in the function instruction 6, the parameter data themselves cannot be entered in this program. As mentioned before, therefore, the parameters 62 are loaded in the form of the address of the memory which stores the data, or in the form of codes corresponding to the data, instead. As a result, there arises a need of complicated processings such as code conversion of the data or creation of codes corresponding to the data and writing and reading the created codes, etc., thereby giving rise to problem such as the complication of input and identification operations.

Further, one movement control operation cannot be executed with a single function instruction 6, so that not only programming operation becomes complicated but also the contents of the movement control operation cannot readily be grasped and confirmed in the case where a plurality of function instructions 6a and 6b have to be combined, as in the example of FIG. 6B.

### Disclosure of the Invention

An object of the present invention is to provide 8 program creating system for a motion controller, capable of solving the aforementioned problems of the conventional programming system for a motion controller and of facilitating entry of function instruction data in a movement control operation. Another object is to provide a program creating system for a motion controller, capable of setting a movement control operation by a single function instruction and easily recognizing and confirming the contents of the movement control operation.

In order to achieve the above object, a program creating system for a motion controller according to the present invention comprises program editing means for editing a sequential program with reference to a ladder diagram, axis movement data input means for writing necessary information for commanding axis movement of a motion controller in the ladder diagram edited by the program editing means, and a program generating means for reading and analyzing the ladder diagram created by the program editing means and programming the axis movement information for the motion controller written in the form of the ladder diagram, thereby generating a motion program for the motion controller.

In particular, the sequential program created by the program editing means contains programmable controller function instructions.

Preferably, the necessary information for commanding axis movement of the motion controller includes a function name indicative of the contents of axis movement operation, specification of an axis, and data on the function of the axis.

Preferably, the axis movement data input means outputs to the program creating means a code for specifying that the information be used to command axis movement of the motion controller, a code for specifying the function name, a code for specifying the axis, and values of function data.

Preferably, the function name indicative of the contents of the axis movement operation includes at least one of items including acceleration, velocity, axis movement, continuous movement, movement to a predetermined position, and dwell.

Preferably, the programmable controller includes axis movement data storage means for storing, as a sub-program, the information inputted by the axis movement data input means, and a memory for storing the program which is used to fetch the sub-program stored in the axis movement data storage means and analyze it to generate the motion program for the motion controller.

Further preferably, the axis movement data input means is a manual data input device with a display screen proper to the programmable controller.

Constructed as described above, the system according to the present invention can easily generate the motion program for the motion controller by entering an axis movement command and necessary data for the command into a ladder program and executing them as a part of the ladder program. More specifically, necessary data for specifying the axis movement command are added as a part (sub-program) of the ladder program, to a ladder program composed of conventional PC function instructions, whereby they are programmed. Thus, a program for generating the motion program for the motion controller can be created only by adding software designed for programming axis movement command data, inputted as a sub-program, to conventional programming software based on PC functions. As described above, according to the present invention, the necessary data for specifying the axis movement command are directly inputted through interactive operation using the display screen and incorporated, as a part of the ladder program, into the ladder program, so that the data can be inputted without using any special codes that are required by a conventional PC axis control function.

### Brief Description of the Drawings

FIG. 1 is a block diagram for illustrating an example of the configuration of a programmable controller (PC) to which a system according to the present invention is applied;
FIG. 2A is a diagram for illustrating that a motion function instruction according to the present invention is composed of one or more motion commands;
FIG. 2B is a diagram for illustrating a form in which the motion function instruction of FIG. 2A is displayed on a screen;
FIG. 3 is a flowchart showing steps of procedure a CPU of the PC carries out in setting the motion function instruction;
FIGS. 4A to 4D are diagrams showing states of the displays on the screen in individual stages of processing shown in the flowchart of FIG. 3;
FIG. 5A is a diagram showing a state in which a plurality of motion commands constituting the motion function instruction are displayed on the screen;
FIG. 5B is a diagram showing a state in which motion function instructions are displayed in a ladder editing picture;
FIG. 5C is a diagram showing a state in which the contents of the motion function instruction is displayed on the screen; and
FIGS. 6A and 6B are diagrams showing an example of a program for PC axis control created in a conventional ladder form.

### Best Mode for Carrying Out the Invention

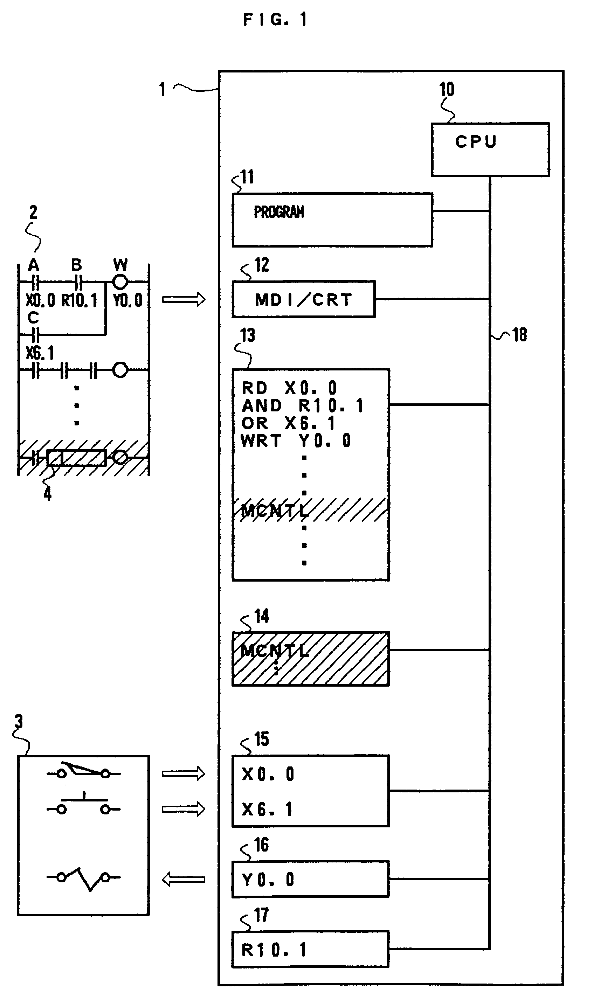

Referring first to the block diagram of FIG. 1, an example of a PC that constitutes a program creating system for a motion controller according to the present invention will be described.

A PC 1 receives a sequence program 2 and carries out operation control of a control object of a machine in accordance with the sequence program 2. The PC 1 comprises a ROM 11 connected to a CPU 10 through a bus 18, a manual data input device with display (hereinafter referred to as MDI/CRT) 12, sequence program memory 13, input circuit 15, output circuit 16, and internal relay 17.

The ROM 11 stores various programs, which are commonly used in a conventional PC, such as system programs for controlling the whole system, control programs for controlling input and output of instruction and data, transformation programs for generating object programs, etc. The MDI/CRT 12 comprises an input device for inputting the sequence program 2 and various data and a display device. The sequence program memory 13 is storage means for loading the inputted sequence program into the PC 1. The input circuit 15 is a circuit for inputting signals representing the states of relays and switches of the control object 3 of the machine, as addresses (e.g., X0.0, X6.1). The output circuit 16 is a circuit that delivers signals, as addresses (e.g., Y10.0), to the relays and switches of the control object 3. Further, the internal relay 17 is storage means, such as a RAM, that stores the relay states in the PC 1 as addresses (e.g., R10.0).

The PC 1 described above is constructed in the same manner as a conventional one. The present invention is further characterized in that a motion function instruction memory 14, as storage means for storing a motion function instruction formed when the sequence program 2 is inputted, is connected to the bus 18 in the PC 1. The ROM 11 also stores a program for creating the motion program to be executed by the motion controller by fetching and analyzing the motion function instruction stored in the motion function instruction memory 14. The block 14 of FIG. 1 is hatched in order to indicate that the addition of the motion function instruction memory 14 to a conventional PC is a feature of the present invention.

Further, the sequence program 2 to be inputted to the PC 1 with the motion function instruction memory 14 added thereto is described in a ladder form, and includes a motion function instruction 4. The region of the motion function instruction 4 in Fig. 1 is also hatched in order to indicate that the addition of the motion function instruction 4 to a conventional sequence program is a feature of the present invention.

Thus, in the programming system for a motion controller according to the present invention, the PC 1 serves as the motion controller.

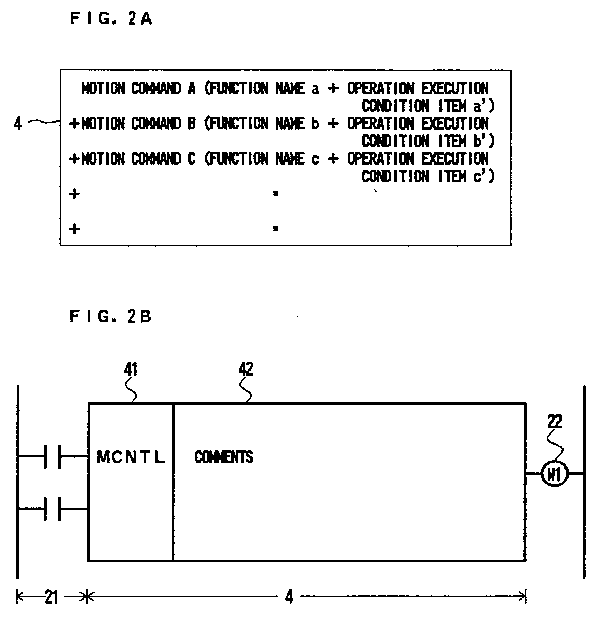

Referring now to FIGS. 2A and 2B, the configuration and screen display of the motion function instruction of the present invention in the case where the sequence program is provided in a ladder form will be described.

The motion function instruction 4 is composed of motion commands for instructing individual axes to move. As shown in FIG. 2A, individual motion commands A, B, C, ... are composed of function names a, b, c, ... and various items a', b', c', ... for setting conditions for operation execution of the functions, respectively. The function names and the operation execution condition items can be inputted and set directly as data without requiring code conversion.

Each function name, which is used to specify the contents of operation of the axes, includes items such as acceleration command, velocity command, axis movement command, dwell command, etc. On the other hand, the items for setting conditions for the operation execution include specification of the axis to be operated, values (numerical data) of velocity and acceleration, specification for indicating that the values be absolute values, etc.

One motion function instruction 4 is composed of one or combination of two or more motion commands.

The function name in each motion command specifies the contents of axis operation, including items such as the acceleration command, velocity command, axis movement command, dwell command, etc. On the other hand, the operation execution conditions include the items such the axis to be operated, velocity and acceleration values, specification that the values be absolute values, etc.

The motion function instruction 4 is set by using the programs stored in the ROM 11 of the motion controller (PC 1) while displaying it on the MDI/CRT 12. FIG. 2B shows an example of the motion function instruction 4 that is displayed in the form of a ladder diagram on the MDI/CRT 12. Referring to FIG. 2B, a square frame represents the motion function instruction 4, to which are added control conditions 21 for the motion function instruction 4 and a relay symbol 22 indicative of completion of transfer.

The square frame of the motion function instruction 4 is displayed on a screen in the same form as a function instruction represented in a sequence program (see the sequence program 2 in FIG. 1) based on the conventional ladder form. The motion program is generated by using this motion function instruction 4, and the generated motion program, like a conventional ladder program, is decoded and executed by the motion controller.

A display of the motion function instruction 4 comprises a portion 41 for identifying the motion function instruction and a comment portion 42 describing represents the contents of the motion function instruction. In the example of FIG. 2B, a symbol "MCNTL" is displayed in the portion 41 for indicating it is a motion function instruction. Also, a setter is allowed to display comments in the portion 42 at his option.

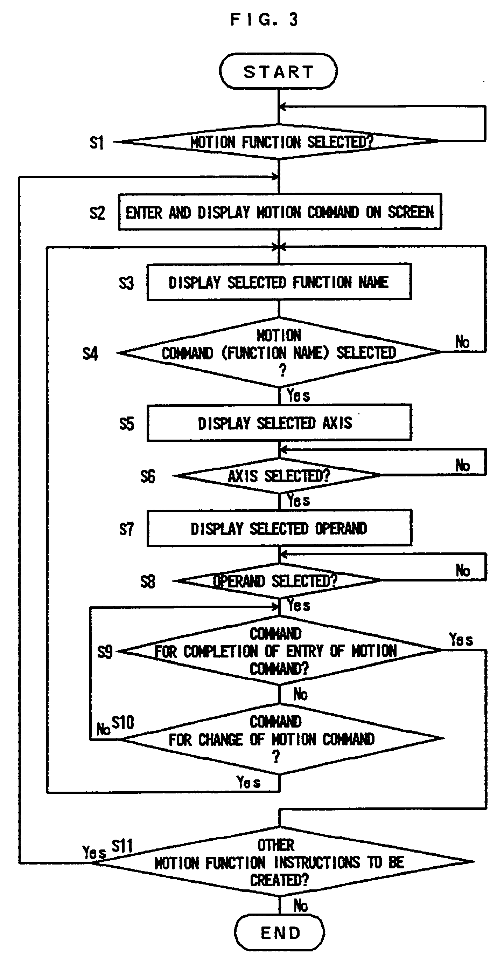

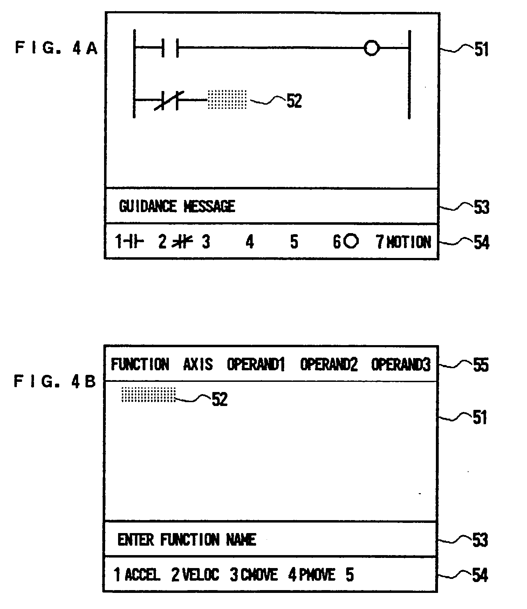

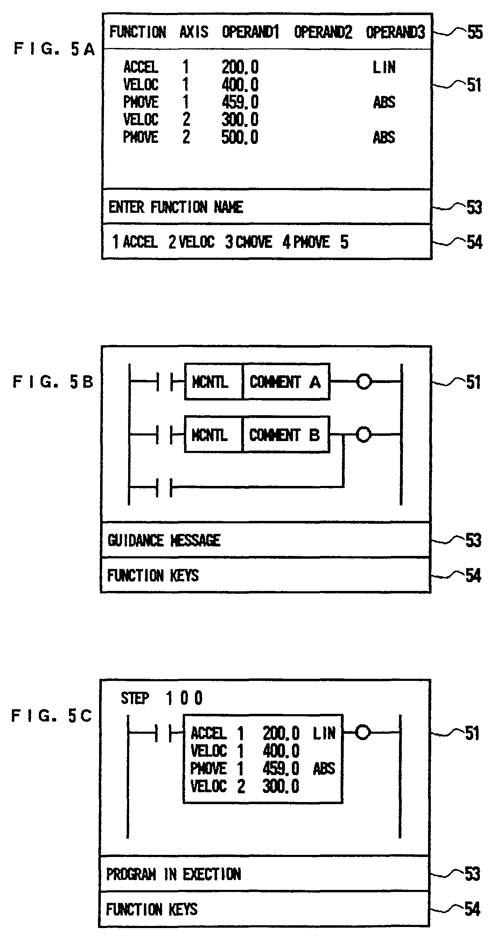

Referring now to the flowchart of FIG. 3 and the display screen diagrams of FIGS. 4A to 4D and FIGS. 5A to 5C, steps of procedure for setting the motion function instruction will be described.

In executing the motion program by editing the ladder diagram, a program as an object of editing is first selected, and a mode for ladder diagram editing is then established by menu selection. The ladder diagram editing can be carried out with reference to a picture displayed on the MDI/CRT 12. Since operation for editing a ladder diagram is generally known, a description of this operation is omitted here. Accordingly, explanation is started in the following from a step of creating the motion program by using the MDI/CRT 12 of the motion controller (Pc 1) after the establishment of the ladder diagram editing mode by menu selection.

FIG. 4A shows a state in which the creation of the motion program by using conventional function instructions is started after the establishment of the ladder diagram editing mode by menu selection (Step S1). The display screen of the MDI/CRT 12 is divided into a display section 51 for the ladder diagram, a display section 53 for guidance messages, and a display section 54 for function keys. Besides the ladder diagram, a cursor 52 is displayed in the display section 51. When an input key of the MDI/CRT 12 is depressed, a character or figure corresponding to this key is displayed in the position of the cursor 52. The guidance messages given in the display section 53 are guidance indications for ladder diagram editing. The display section 54 is used to assign various function selection keys for ladder diagram editing to function keys 1 to 7, respectively. In the example of FIG. 4A, for motion function creation is allotted to the function key 7.

So, when the function key 7 is selected from the picture of FIG. 4A (Step S1), a motion function creation mode is established, whereupon the CPU 10 changes a part of the display section 51 of the screen into a display section 55 in which set items are displayed, as shown in FIG. 4B (Step S2). In this display section 55, setting items "FUNCTION, AXIS, OPERAND 1, OPERAND 2, OPERAND 3" are displayed.

Further, the CPU 10 locates the cursor 52 in the display section 51 right under "FUNCTION" among the items in the display section 55 to enter a state awaiting selection of a function type. When this is done, a message "ENTER FUNCTION NAME" is displayed in the display section 53. Moreover, the CPU 10 displays symbols for specifying selectable functions in the function key display section 54, corresponding to key numbers (Step S3).

The selectable functions include the acceleration command, velocity command, axis movement command, continuous movement command, movement command for the predetermined position, dwell command, etc. Among these functions, in this case, the acceleration command is assigned to the key 1 using a symbol ACCEL, the velocity command to the key 2 using a symbol VELOC, the continuous movement command to the key 3 using a symbol CMOVE, and the movement command for the predetermined position to the key 4 using a symbol PMOVE.

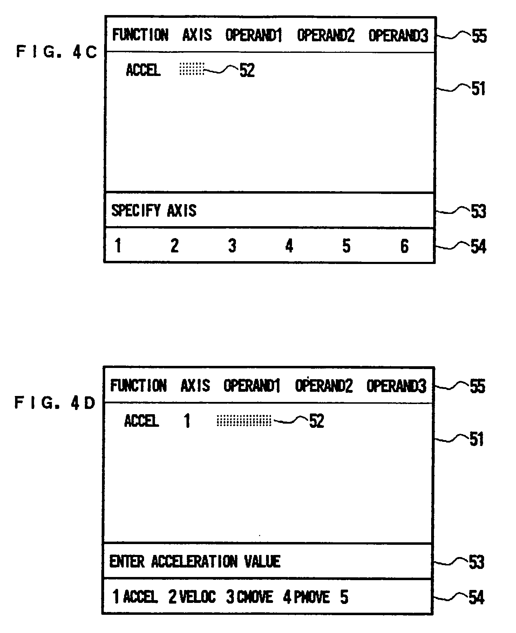

If the key number 1 corresponding to the acceleration command (ACCEL) is selected from the picture of FIG. 4A and inputted in response to the message "ENTER FUNCTION NAME" in the display section 53 (Step S4), the screen is brought to the state shown in FIG. 4C. More specifically, in FIG. 4C, "ACCEL" corresponding to the previously selected key 1 is displayed in the region of the display section 51 which is situated right under "FUNCTION NAME" in the item display section 55. In the example described above, the function key 1 in the display section 54 is selected in order to display "ACCEL" in the position of the cursor 52 in the display section 51. Alternatively, however, "ACCEL" may be displayed by depressing alphabetic keys of the MDI/CRT 12.

Further, the CPU 10 locates the cursor 52 in the display section 51 right under the item "AXIS" among the items in the display section 55 to enter a state awaiting specification of an axis. When this is done, a message "SPECIFY AXIS" is displayed in the display section 53. Moreover, the CPU 10 displays numbers for selectable axes in the function key display section 54 (Step S5).

Therefore, if any of the axes is specified by means of the function key in the display section 54 (Step S6), the number (1 in the example of FIG. 4D) for the specified axis is displayed in the region of the display section 51 right under the item of "AXIS" in the item display section 55, as shown in FIG. 4D. Instead of displaying the axis number in the position for the cursor 52 in the display section 51 by means of the function key in the display section 54, the axis number may be displayed by depressing one of ten-keys of the MDI/CRT 12.

Further, the CPU 10 locates the cursor 52 in the display section 51 right under "OPERAND 1" among the items in the display section 55 to enter a state awaiting the input of the numerical value (data) of an operand 1 by means of the ten-keys of the MDI/CRT 12. As a result, a message to the effect that a numerical value (data) for specified assigned function should be inputted will be displayed. Since the acceleration of an axis 1 is specified in the case of FIG. 4D, a message "ENTER ACCELERATION VALUE" is displayed in the message display section 53 (Step S7).

A plurality of operands can be set if the specified function requires entries of a plurality of numerical values or data. For instance, in the case where the function is velocity, it is necessary to input only a value (velocity value) representing the velocity level, so that only one operand is enough. In the case where the function is acceleration, however, it is sometimes necessary to specify a change pattern of the acceleration as well as the value (acceleration value: operand 1) representing the acceleration level. In such a case, two operands must be set. The acceleration change pattern is specified by a symbol (e. g., "LIN" specifying that the acceleration change is "linear"; "BELL" specifying that acceleration has a bell- shaped change pattern; "EXP" specifying a change pattern having an exponential curve.

The operand to be assigned to the selected function is selected by moving the cursor 52 (Step S8). In the example of FIG. 4D, the cursor 52 in the display section 51 is right under "OPERAND 1" displayed in the item display section 55, indicating that the operand 1 is selected currently. The operand 3 can be selected by moving the cursor 52 to the position right under "OPERAND 3".

If one motion command is created by entering a necessary operand for one function and one axis specified in this manner, the setter is supposed to depress a key (e.g., END key) for the termination of creation of each motion command. Thereupon, the CPU 10 detects the depression of this key (Step S9), and then determines whether or not a key indicative of the completion of creation of all motion commands is depressed by the setter (Step S11). If this key has not been depressed, the present program returns to Step S3, whereupon creation of the next motion command will be started. In this case, the cursor 52 comes right under the indication of "ACCEL" in FIG. 4D.

On the other hand, in step 9, if the setter wishes to change (part of) the motion commands which has already been created, before depressing the key for the termination of creation of each motion command, the setter is supposed to depress a motion command change key. When the CPU 10 recognizes the depression of this key, the present program returns to Step S3, whereupon the cursor is brought to the position of the data or symbol to be changed, and the data or symbol concerned is corrected by overwriting.

FIG. 5A shows a picture in which a plurality of motion commands are entered. Each motion command is displayed in one line in the display section 51. According to the example of FIG. 5A, the acceleration, velocity, and movement command are set for the axis 1 in response to three motion commands, while the velocity and the movement command for the movement to predetermined position are set for an axis 2 in response to two motion commands. A symbol "ABS" for the operand 3 in FIG. 5A indicates that the command is an absolute command (not an incremental command).

The motion function instruction 4 thus created is accompanied with an identifier and loaded as a sub-program into the motion function instruction memory 14. In the ladder diagram editing operation, the motion function instruction is read from the memory 14 and utilized for the creation of the motion program. If comments (see FIG. 2B) indicative of the contents of the motion function are displayed besides the identifier when a plurality of motion function instructions 4 stored in the motion function instruction memory 14 are displayed, the setter can extract his desired motion function instruction 4 with reference to those comments.

The ladder editing can be continued by restoring the ladder editing picture by means of a selector key (not shown) after the motion function instructions are created. FIG. 5B shows a state of display of the motion function instructions in the ladder editing picture, in which each motion function instruction, along with a conventional ladder program, is represented by an indication "MCNTL" that identifies the motion function instruction and a comment indicative of the contents thereof. In checking each motion function instruction for contents thereof in this ladder editing picture, the contents of the motion function instruction can be displayed by means of a selector key (not shown), as shown in FIG. 5C.

## Claims

1. A program creating system for a motion controller, comprising:
program editing means for editing a sequential program with reference to a ladder diagram;
axis movement data input means for writing information necessary for commanding axis movement of a motion controller in the ladder diagram edited by said program editing means; and
program generating means for reading and analyzing the ladder diagram created by said program editing means and programming the axis movement information for the motion controller written in the form of said ladder diagram, thereby generating a motion program for the motion controller.

2. A program creating system for a motion controller according to claim 1, wherein said sequential program created by said program editing means includes programmable controller function instructions.

3. A program creating system for a motion controller according to claim 1, wherein said information necessary for commanding axis movement of said motion controller includes a function name indicating the contents of an axis movement operation, specification of an axis, and data on the function of the axis.

4. A program creating system for a motion controller according to claim 3, wherein said axis movement data input means outputs to said program creating means a code for specifying that the information is for commanding axis movement of the motion controller, a code for specifying the function name, a code for specifying the axis, and numeric values of function data.

5. A program creating system for a motion controller according to claim 3, wherein said function name indicative of the contents of said axis movement operation includes at least one of items including acceleration, velocity, axis movement, continuous movement, movement to a predetermined position, and dwell.

6. A program creating system for a motion controller according to claim 2, wherein said programmable controller comprises axis movement data storage means for storing, as a sub-program, the information inputted by said axis movement data input means, and a memory for storing the program which is used to fetch the sub- program stored in the axis movement data storage means and analyze it to generate the motion program for the motion controller.

7. A program creating system for a motion controller according to claim 6, wherein said axis movement data input means is a manual data input device with a display screen, which is incorporated into said programmable controller.
